# EUROPÄISCHE PATENTSCHRIFT

(11) **EP 1 220 253 B1**
(45) Veröffentlichungstag und Bekanntmachung des Hinweises auf die Patenterteilung: **24.03.2004**
(21) Anmeldenummer: 01129368.5
(22) Anmeldetag: 17.12.2001
(51) Int. Cl.: H01H 35/14

(54) **Mechanischer Beschleunigungssensor**
Mechanical acceleration sensor
Capteur mécanique d'accélération

(30) Priorität: 20.12.2000 DE 20021531 U
(43) Veröffentlichungstag der Anmeldung: 03.07.2002
(73) Patentinhaber: TRW Automotive Electronics & Components GmbH & Co. KG, 78315 Radolfzell (DE)
(72) Erfinder: Flaig, Thomas, 78315 Radolfzell (DE); Skofljanec, Robert, 78345 Moos-Bankholzen (DE)
(74) Vertreter: Degwert, Hartmut, Dipl.-Phys.

(56) Entgegenhaltungen:
- DE-C- 3 713 698
- JP-A- 9 099 806
- US-A- 5 231 253

## Beschreibung

Die Erfindung betrifft einen Schalter gemäß dem Oberbegriff von Anspruch 1.

Derartige Schalter werden in Fahrzeugen benötigt, um die Aktivierung von Rückhaltesystemen erst freizugeben, wenn eine auf einen Fahrzeugaufprall hindeutende (negative) Beschleunigung festgestellt wird. An die Funktionssicherheit eines solchen Schalters sind höchste Anforderungen zu stellen.

Aus der DE 195 18 824 C1 ist bereits ein Schalter dieser Art bekannt, bei dem der Massekörper in einem Führungsgehäuse verschiebbar geführt und durch eine Feder in eine Ruheposition belastet ist. Der Massekörper ist rotationssymetrisch bzw. als Kugel ausgebildet. Der Massekörper betätigt einen elektrischen Kontakt, der seinerseits in eine Ruheposition vorbelastet ist. In einer ersten Bewegungsphase bewegt sich der Massekörper nur bis an den elektrischen Kontakt heran. Erst wenn dessen höhere Rückstellkraft zusätzlich zu der den Massekörper belastenden Feder überwunden ist, erfolgt die Kontaktgabe. Auf diese Weise soll eine sichere und über eine vorbestimmte Zeitdauer anhaltende Kontaktgabe ohne Kontaktprellen erreicht werden.

Bei anderen bekannten Schaltern werden mechanische Betätigungssysteme mit Schnapp-Effekt oder magnetisch betätigte Schaltelemente benutzt. Allen bekannten Lösungen ist gemeinsam, daß sie zum Erreichen eines zuverlässigen und reproduzierbaren Schaltverhaltens einen hohen baulichen Aufwand und/oder eine kritische Justierung erfordern.

In der gattungsgemäßen DE-C-37 13 698 ist ein Schalter mit einem auf Beschleunigung ansprechenden auslenkbaren Massekörper gezeigt, der an zwei Federn aufgehängt ist. An den dem Massekörper abgewandten Enden der Federn sind diese fest in einem Gehäuseboden verankert. Der Massekörper ist so bezüglich der zwei Federn angeordnet, daß er in eine Richtung ausgelenkt werden kann.

Durch die Erfindung wird ein Schalter geschaffen, der mit nur wenigen einfachen Bauteilen eine zuverlässige und gut reproduzierbare Schaltfunktion ohne jegliche Justierung gewährleistet.

Der erfindungsgemäße Schalter gemäß dem Oberbegriff von Anspruch 1 zeichnet sich dadurch aus, daß der Massekörper ausgehend von einer Ruhestellung in zwei entgegengesetzte Richtungen auslenkbar ist, wobei der Massekörper in der Ruhestellung mit beidseitigem Abstand zwischen den Lagerarmen gehalten ist. Die zwei elastisch auslenkbaren Lagerarme bilden ein Führungs-Parallelogramm, das dem Massekörper bei seiner Auslenkung im wesentlichen eine Parallelverschiebung aufzwingt und zugleich eine Rückstellkraft ausübt. Da der Massekörper mit beidseitigem Abstand zwischen den Lagerarmen gehalten ist, bleibt er bei seiner Auslenkung ohne jede Berührung mit anderen Bauteilen, so daß seine Bewegung durch keinerlei Reibung behindert wird.

Herkömmliche Schalter zur Freigabe der Aktivierung von Rückhaltesystemen in Fahrzeugen können nur auf eine Beschleunigungsrichtung ansprechen. Üblicherweise werden sie für den Frontaufprall ausgelegt. Der erfindungsgemäße Schalter ermöglicht hingegen auf einfachste Weise die Ansteuerung von zwei Schaltsystemen, eines für den Frontaufprall und eines für den Heckaufprall, da der Massekörper in zwei entgegengesetzten Richtungen auslenkbar ist.

Vorzugsweise wird der Schalter auf einer Sockelplatte aufgebaut, in der die unbeweglichen Enden der Lagerarme verankert sind. Massekörper mit Lagerung und Schaltsystem sind von einem haubenartigen Gehäuse umschlossen, das mit dem Umfangsrand der Sockelplatte verbunden ist. In der Sockelplatte sind auch Kontaktstifte verankert, die eine unmittelbare Befestigung des Schalters auf einer Leiterplatte ermöglichen. Der Schalter kann überaus kompakt ausgebildet werden. Bei einem quaderförmigen Gehäuse kann die Kantenlänge weniger als 20 mm betragen.

Mit der erfindungsgemäßen Ausbildung des Schalters können vielfältige Bauformen und Anordnungen von Schaltsystemen verwendet werden. Im einfachsten Fall hat der Massekörper einen Betätigungsarm, der an einem Federkontaktelement angreift. In diesem Fall wird bevorzugt ein Ruhekontakt eingesetzt, der durch den Betätigungsarm des Massekörpers in seiner Öfnungsstellung gehalten wird, solange der Massekörper sich in seinem nicht ausgelenkten Ruhezustand befindet, und bei Auslenkung .des Massekörpers von dessen Betätigungsarm freikommt und selbsttätig die Schließposition einnimmt. Die Bewegung des Massekörpers hat dann keinen weiteren Einfluß auf das Schaltverhalten des Schaltsystems.

Bei höheren Ansprüchen an die Funktionalität des Schalters können aufwendigere Schaltsysteme eingesetzt werden, beispielsweise optische oder magnetische Schalteinheiten. Damit können außer der elementaren Schaltfunktion zusätzliche Schaltsignale für verschiedene Zwecke erzeugt werden, insbesondere auch für Diagnosezwecke nutzbare Signale.

Weitere Vorteile und Merkmale der Erfindung ergeben sich aus der folgenden Beschreibung mehrerer Ausführungsformen und aus den beigefügten Zeichnungen, auf die Bezug genommen wird. In den Zeichnungen zeigen:

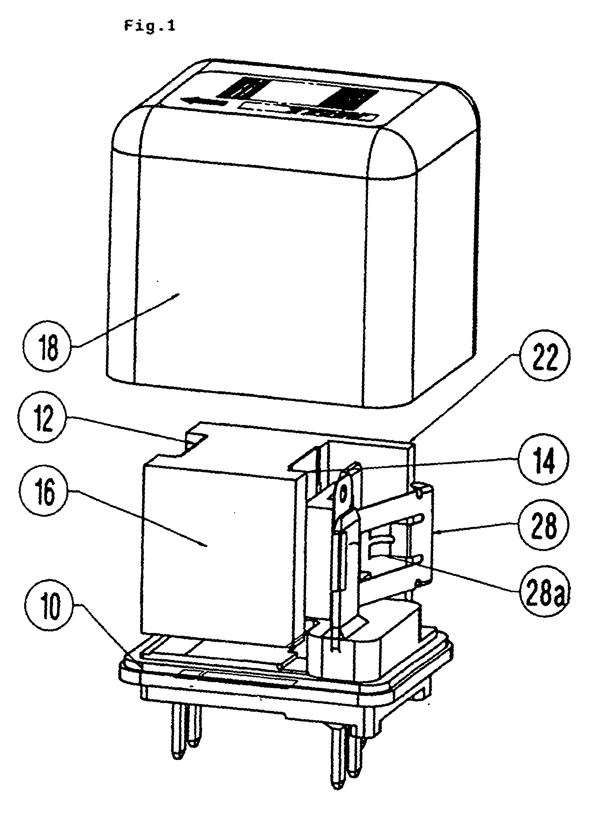

Figur 1 eine perspektivische Gesamtansicht eines erfindungsgemäßen Schalters bei abgenommener Haube;
Figur 2 eine schematisch geschnittene Seitenansicht des Schalters bei abgenommener Haube im Ruhezustand;
Figur 3 eine geschnittene Seitenansicht des Schalters im aktivierten Zustand bei aufgesetzter Haube;
Figur 4a und 4b Draufsichten des Schalters bei abgenommener Haube im Ruhezustand und im aktivierten Zustand; und
Figur 5 eine schematische Schnittansicht einer weiteren Ausführungsform.

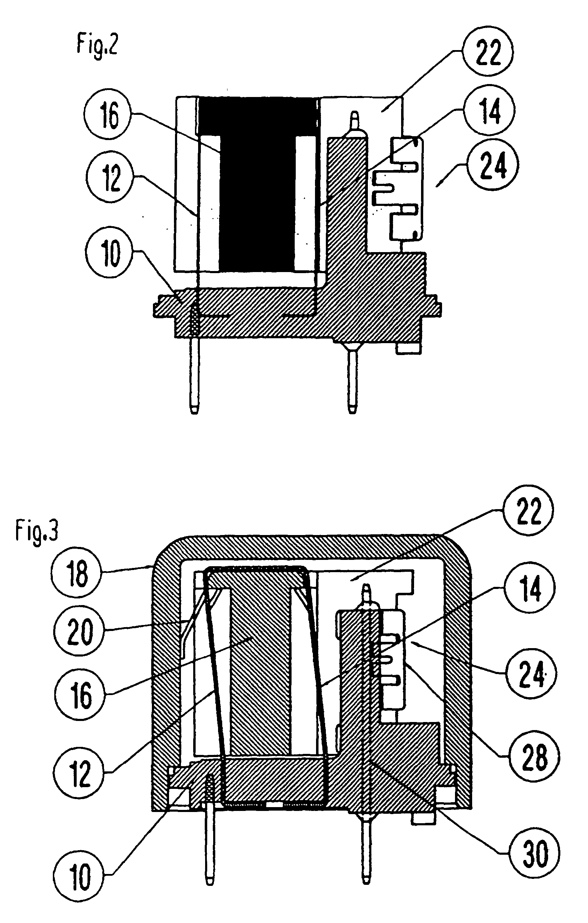

Der Schalter hat eine allgemein rechteckförmige Sockelplatte 10 aus Kunststoff. In der Sockelplatte 10 sind zwei parallele, senkrecht hochragende Lagerarme 12, 14 an ihren unteren Enden verankert. Bei der in Figur 2 gezeigten Ausführungsform sind die in der Sockelplatte 10 verankerten Enden der Lagerarme 12, 14 abgewinkelt und vollständig im Material der Sockelplatte eingebettet. Die Lagerarme 12, 14 sind elastisch auslenkbar und bestehen aus Federstahl oder einem geeigneten Kunststoff. An den oberen Enden der Lagerarme 12, 14 ist ein Massekörper 16 befestigt. Der Massekörper 16 ist bei der gezeigten Ausführungsform allgemein würfelförmig. Die Lagerarme 12, 14 bilden ein Führungs-Parallelogramm für den Massekörper 16, der an den oberen Enden der Lagerarme 12, 14 aufgehängt ist. Da die Lagerarme 12, 14 beiderseits des Massekörpers 16 von diesem beabstandet sind, ist der Massekörper unter dem Einfluß von Trägheitskräften in zwei entgegengesetzte Richtungen auslenkbar, wobei er durch die Lagerarme im wesentlichen mit einer Parallelverschiebung geführt und zugleich mit einer Rückstellkraft in eine Ruhestellung beaufschlagt wird.

Figur 3 zeigt eine im Bereich der Verankerung der Lagerarme 12, 14 in der Sockelplatte 10 abgewandelte Ausführungsform, bei der die Lagerarme überdies einen nahezu geschlossenen Bügel bilden, der den Massekörper 16 umgreift. Die Figur 3 zeigt den Massekörper 16 im ausgelenkten Zustand. Ferner ist in Figur 3 eine Haube 18 gezeigt, die den Schalter umschließt und am Umfangsrand der Sockelplatte 10 befestigt ist. Um ein Anstoßen des Massekörpers 16 an der Innenseite der Haube 18 zu vermeiden, ist ein blattfederartiges Anschlagelement 20 vorgesehen.

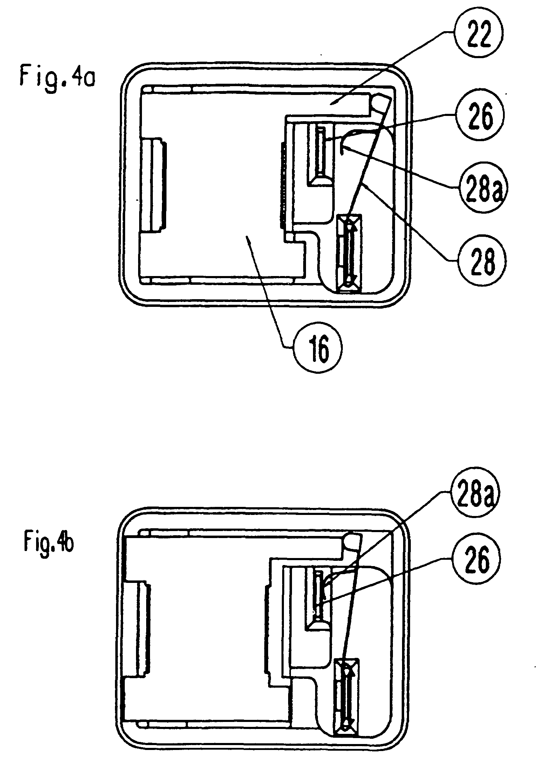

Der Massekörper 16 hat einen einteilig angeformten Betätigungsarm 22 für ein allgemein mit 24 bezeichnetes Schaltsystem. Das Schaltsystem 24 besteht bei der gezeigten Ausführungsform aus einem an der Sockelplatte 10 innenseitig abgestützten feststehenden Kontakt 26, von dem ein Kontaktstift durch die Sockelplatte 10 nach unten führt, und einem beweglichen Kontakt 28, der als Federbügel ausgebildet und an einem gleichfalls die Sockelplatte 10 durchragenden Kontaktstift 30 befestigt ist. Der bewegliche Kontakt 28 hat eine gekrümmte Kontaktfahne 28a, die mit dem feststehenden Kontakt 26 zusammenwirkt. Der bewegliche Kontakt 28 ist federnd gegen den feststehenden Kontakt 26 belastet und wird durch den Betätigungsarm 22 des Massekörpers 16 in der Öffnungsstellung gehalten, solange der Massekörper 16 im nicht ausgelenkten Ruhezustand ist. Dieser Zustand ist in Figur 4a gezeigt. Wenn der Massekörper 16 durch Massenträgheit in die ausgelenkte Stellung gelangt (Figur 3), gibt der Betätigungsarm 22 den beweglichen Kontakt 28 frei, so daß dessen Kontaktfahne 28a mit dem feststehenden Kontakt 26 in Berührung kommt, wie in Figur 4b gezeigt.

Da der Massekörper 16 außer durch Befestigung an den oberen Enden der Lagerarme 12, 14 völlig frei ist, wird seine Bewegung durch keinerlei schädliche Einflüsse wie Reibung oder Hysterese-Effekte beeinträchtigt. Das Schaltverhalten des Schaltsystems 24 wird nur durch die Eigenschaften des beweglichen Kontaktes 28 bestimmt, da der Massekörper 16 das Schaltsystem mit seinem Betätigungsarm 22 lediglich öffnet und die Kontaktgabe allein durch die Elastizität des beweglichen Kontaktes bestimmt wird. Man sieht, daß mit einfachsten Mitteln und wenigen Bauteilen eine sichere, reproduzierbare Schaltfunktion erreicht wird, die keinerlei Justierarbeiten erfordert.

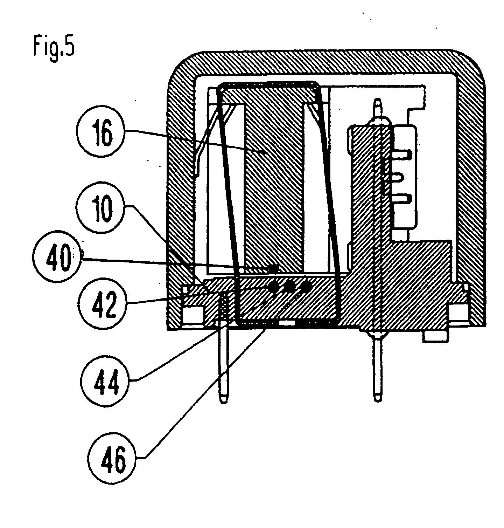

Bei der in Figur 5 gezeigten Ausführungsform ist nur das Schaltsystem verschieden von der zuvor beschriebenen Ausführungsform. Es ist hier durch einen im Massekörper 16 eingebetteten Permanent-Magnet 40 und drei in der Sockelplatte 10 eingebettete Reed-Schaltkontakte 42, 44, 46 verwirklicht. Die Anordnung der Reed-Schaltkontakte 42, 44, 46 entspricht den zu detektierenden Stellungen des Massekörpers 16. Bei der gezeigten Ausführungsform kann sowohl die mittlere Ruhestellung als auch jede der zwei in entgegengesetzte Richtungen ausgelenkten aktivierten Stellungen des Massekörpers 16 detektiert werden. Bei der in Figur 5 gezeigten Auslenkstellung des Massekörpers 16 befindet sich der Permanent-Magnet 40 senkrecht über dem Reed-Schaltkontakt 42, der dadurch geschlossen wird. In der Ruhestellung des Massekörpers 16 befindet sich der Permanent-Magnet 40 senkrecht über dem Reed-Schaltkontakt 44, der dann geschlossen wird. Schließlich befindet sich der Permanent-Magnet 40 in der entgegengesetzten Auslenkstellung, die einem Heckaufprall des Fahrzeugs entsprechen kann, senkrecht über dem Reed-Schaltkontakt 46, der dann geschlossen ist.

Es sind zahlreiche weitere Ausführungsvarianten des Schaltsystems möglich. Insbesondere können optische Lösungen mit Lichtschranke oder Reflektor verwirklicht werden, ebenso wie magnetische Systeme mit Hall-Elementen.

Bei einer besonders vorteilhaften Ausführungsform sind alle oder nahezu alle Bestandteile des Schalters in einer Zweikomponenten-Spritzgießtechnik hergestellt. Eine der zwei Kunststoffkomponenten ist metallisierbar und erhält an den erforderlichen Stellen eine Metallbeschichtung. Durch die Dicke der Metallschicht werden die Funktionseigenschaften des Schalters bestimmt, insbesondere die Masse des Massekörpers und die Federkonstante der Lagerarme, und folglich die Auslöseschwelle des Schalters. Da der Schalter ein einheitlicher Spritzteil ist, können alle Montageschritte entfallen. An Stelle der Kontaktstifte bei den zuvor beschriebenen Ausführungsformen hat die Sockelplatte metallisierte Kontaktflächen, so daß der Schalter als SMD-Bauteil unmittelbar auf einer Leiterplatte aufgesetzt und verlötet werden kann.

## Patentansprüche

1. Schalter mit einem auf Beschleunigung ansprechend auslenkbaren Massekörper (16), durch den ein Schaltsystem (24) betätigbar ist, und der an zwei parallelen, elastisch auslenkbaren Lagerarmen (12, 14) aufgehängt ist, die ein erstes, fest verankertes Ende und ein zweites, bewegliches Ende haben, an dem der Massekörper (16) befestigt ist, **dadurch gekennzeichnet, daß** der Massekörper (16) ausgehend von einer Ruhestellung in zwei entgegengesetzte Richtungen auslenkbar ist, wobei der Massekörper in der Ruhestellung mit beidseitigem Abstand zwischen den Lagerarmen (12, 14) gehalten ist.

2. Schalter nach Anspruch 1, **dadurch gekennzeichnet, daß** die Lagerarme (12, 14) einen den Massekörper (16) umgreifenden durchgehenden Bügel bilden.

3. Schalter nach Anspruch 2, **dadurch gekennzeichnet, daß** die Lagerarme (12, 14) an ihrem ersten Ende in einer Sockelplatte (10) verankert sind.

4. Schalter nach einem der vorstehenden Ansprüche, **dadurch gekennzeichnet, daß** der Massekörper (16) einen Betätigungsarm (22) für das Schaltsystem (24) aufweist.

5. Schalter nach Anspruch 4, **dadurch gekennzeichnet, daß** der Betätigungsarm (22) an einem elektromechanischen Kontaktelement (28) angreift.

6. Schalter nach Anspruch 5, **dadurch gekennzeichnet, daß** das Kontaktelement (28) ein Ruhekontaktelement ist, das durch Federkraft in eine Schließstellung belastet ist und durch den Betätigungsarm (22) des unausgelenkten Massekörpers (16) in einer Öffnungsstellung gehalten wird.

7. Schalter nach Anspruch 5, **dadurch gekennzeichnet, daß** das Kontaktelement (28) ein Arbeitskontakt ist, der durch den Betätigungsarm (22) des ausgelenkten Massekörpers (16) geschlossen wird.

8. Schalter nach Anspruch 6, **dadurch gekennzeichnet, daß** das Kontaktelement (28) ein an einem Kontaktstift (30) befestigtes Ende und ein bewegliches Kontaktfederelement aufweist.

9. Schalter nach Anspruch 8, **dadurch gekennzeichnet, daß** der Kontaktstift (30) in einem Trägersockel verankert ist.

10. Schalter nach einem der Ansprüche 3 bis 9, **dadurch gekennzeichnet, daß** der Massekörper (16) und das Schaltsystem (24) von einer Haube (18) umschlossen sind, die am Umfang der Sockelplatte (10) befestigt ist.

11. Schalter nach Anspruch 10, **dadurch gekennzeichnet, daß** zwischen Massekörper (16) und Innenfläche der Haube (18) ein federndes Anschlagteil (20) angeordnet ist.

12. Schalter nach einem der vorstehenden Ansprüche, **dadurch gekennzeichnet, daß** das Schaltsystem (24) Schalteinheiten (42, 44, 46) aufweist, die verschiedenen Stellungen des Massekörpers (16) zugeordnet sind.

13. Schalter nach Anspruch 12, **dadurch gekennzeichnet, daß** eine (44) der Schalteinheiten der unausgelenkten Ruhestellung des Massekörpers (16) zugeordnet ist.

14. Schalter nach Anspruch 12 oder 13, **dadurch gekennzeichnet, daß** jeder von zwei entgegengesetzten Auslenkstellungen des Massekörpers (16) eine Schalteinheit (42, 46) zugeordnet ist.

15. Schalter nach einem der vorstehenden Ansprüche, **dadurch gekennzeichnet, daß** der Massekörper (16) ein magnetisches Betätigungselement aufweist.

16. Schalter nach einem der vorstehenden Ansprüche, **dadurch gekennzeichnet, daß** der Massekörper (16) ein optisches Betätigungselement aufweist.

17. Schalter nach einem der Ansprüche 3 bis 16, **dadurch gekennzeichnet, daß** die Sockelplatte (10), der Massekörper (16) und die Lagerarme (12, 14) in Zweikomponenten-Spritzgießtechnik hergestellt sind, wobei eine der Komponenten aus einem metallisierbaren Kunststoff besteht, und daß auf dem metallisierbaren Kunststoff wenigstens bereichsweise eine Metallschicht aufgebracht ist.

## Claims

1. A switch comprising an inertial mass (16) which is deflectable in response to acceleration and by means of which a switching system (24) can be actuated and which is suspended on two parallel, elastically deflectable support arms (12, 14) having a first, firmly anchored end and a second, movable end to which the inertial mass (16) is attached, **characterized in that** the inertial mass (16), starting from a resting position, can be deflected in two opposite directions, the inertial mass being held between the support arms (12, 14) with a distance on both sides when in the resting position.

2. The switch according to Claim 1, **characterized in that** the support arms (12, 14) form a continuous bracket that surrounds the inertial mass (16).

3. The switch according to Claim 2, **characterized in that** the first ends of the support arms (12, 14) are anchored in a base plate (10).

4. The switch according to any of the preceding claims, **characterized in that** the inertial mass (16) has an actuation arm (22) for the switching system (24).

5. The switch according to Claim 4, **characterized in that** the actuation arm (22) engages an electromechanical contact element (28).

6. The switch according to Claim 5, **characterized in that** the contact element (28) is a normally closed contact element that is spring-loaded into a closed position and that is held in an open position by the actuation arm (22) of the non-deflected inertial mass (16).

7. The switch according to Claim 5, **characterized in that** the contact element (28) is a normally open contact that is closed by the actuation arm (22) of the deflected inertial mass (16).

8. The switch according to Claim 6, **characterized in that** the contact element (28) has an end attached to a contact pin (30) and a movable contact spring element.

9. The switch according to Claim 8, **characterized in that** the contact pin (30) is anchored in a carrier base.

10. The switch according to any of Claims 3 to 9, **characterized in that** the inertial mass (16) and the switching system (24) are enclosed by a hood (18) that is attached to the periphery of the base plate (10).

11. The switch according to Claim 10, **characterized in that** a resilient stop element (20) is arranged between the inertial mass (16) and the inner surface of the hood (18).

12. The switch according to any of the preceding claims, **characterized in that** the switching system (24) has switching units (42, 44, 46) that are assigned to different positions of the inertial mass (16).

13. The switch according to Claim 12, **characterized in that** one (44) of the switching units is assigned to the non-deflected resting position of the inertial mass (16).

14. The switch according to Claim 12 or 13, **characterized in that** each of two opposite deflection positions of the inertial mass (16) is assigned a switching unit (42, 46).

15. The switch according to any of the preceding claims, **characterized in that** the inertial mass (16) has a magnetic actuation element.

16. The switch according to any of the preceding claims, **characterized in that** the inertial mass (16) has an optical actuation element.

17. The switch according to any of Claims 3 to 16, **characterized in that** the base plate (10), the inertial mass (16) and the support arms (12, 14) are made by means of a two-component injection-molding technique, one of the components consisting of a plastics material that can be metallized, and **in that** at least portions of the plastics material that can be metallized have a metal layer deposited thereon.

## Revendications

1. Commutateur comportant un corps faisant masse (16) qui peut défléchir en réponse à une accélération, par lequel on peut actionner un système de commutation (24) et qui est suspendu à deux bras supports (12, 14) parallèles qui peuvent défléchir de manière élastique et qui ont une première extrémité fermement ancrée et une deuxième extrémité mobile sur laquelle est fixé le corps faisant masse (16), **caractérisé en ce que** le corps faisant masse (16) peut défléchir dans deux directions opposées à partir d'une position de repos, le corps faisant masse (16) étant maintenu dans la position de repos entre les deux bras supports (12, 14) avec une distance des deux côtés.

2. Commutateur selon la revendication 1, **caractérisé en ce que** les bras supports (12, 14) forment un étrier continu entourant le corps faisant masse (16).

3. Commutateur selon la revendication 2, **caractérisé en ce que** les bras supports (12, 14) sont ancrés à leur première extrémité dans une plaque de socle (10).

4. Commutateur selon l'une des revendications précédentes, **caractérisé en ce que** le corps faisant masse (16) présente un bras d'actionnement (22) pour le système de commutation (24).

5. Commutateur selon la revendication 4, **caractérisé en ce que** le bras d'actionnement (22) engage un élément de contact (28) électromécanique (28).

6. Commutateur selon la revendication 5, **caractérisé en ce que** l'élément de contact (28) est un élément de contact au repos qui est sollicité par une force de ressort dans une position de fermeture et qui est maintenu dans une position d'ouverture par le bras d'actionnement (22) du corps faisant masse (16) non défléchi.

7. Commutateur selon la revendication 5, **caractérisé en ce que** l'élément de contact (28) est un contact de travail qui est fermé par le bras d'actionnement (22) du corps faisant masse (16) défléchi.

8. Commutateur selon la revendication 6, **caractérisé en ce que** l'élément de contact (28) présente une extrémité fixée à une fiche de contact (30) et un élément ressort de contact mobile.

9. Commutateur selon la revendication 8, **caractérisé en ce que** la fiche de contact (30) est ancrée dans un socle support.

10. Commutateur selon l'une des revendications 3 à 9, **caractérisé en ce que** le corps faisant masse (16) et le système de commutation (24) sont entourés par un capuchon (18) qui est fixé sur la périphérie de la plaque de socle (10).

11. Commutateur selon la revendication 10, **caractérisé en ce que** une pièce de butée élastique (20) est agencée entre le corps faisant masse (16) et la surface intérieure du capuchon (18).

12. Commutateur selon l'une des revendications précédentes, **caractérisé en ce que** le système de commutation présente des unités de commutation (42, 44, 46) qui sont associées à différentes positions du corps faisant masse (16).

13. Commutateur selon la revendication 12, **caractérisé en ce qu'**une des unités de commutation (44) est associée à la position de repos non défléchie du corps faisant masse (16).

14. Commutateur selon la revendication 12 ou 13, **caractérisé en ce qu'**à chacune de deux positions de déflexion opposées du corps faisant masse (16) est associée une unité de commutation (42, 46).

15. Commutateur selon l'une des revendications précédentes, **caractérisé en ce que** le corps faisant masse (16) présente un élément magnétique d'actionnement.

16. Commutateur selon l'une des revendications précédentes, **caractérisé en ce que** le corps faisant masse (16) présente un élément optique d'actionnement.

17. Commutateur selon l'une des revendications 3 à 16, **caractérisé en ce que** la plaque de socle (10), le corps faisant masse (16) et les bras supports (12, 14) sont fabriqués en technique de moulage par injection de deux composants, un des composants étant en une matière plastique métallisable, et **en ce qu'**une couche de métal est appliquée sur la matière plastique métallisable, au moins sur certaines zones.
